# EUROPÄISCHE PATENTANMELDUNG

(11) **EP 1 947 330 A2**
(43) Veröffentlichungstag der Anmeldung: **23.07.2008**
(21) Anmeldenummer: 07020267.6
(22) Anmeldetag: 17.10.2007
(51) Int. Cl.: F03D 9/00

(54) **Verfahren zum Betreiben eines Windparks**

(30) Priorität: 20.01.2007 DE 102007003030
(71) Anmelder: Nordex Energy GmbH, 22848 Norderstedt (DE)
(72) Erfinder: Jurkat, Mark, 22844 Norderstedt (DE); Lehmann, Jörg, 28844 Weyhe (DE)
(74) Vertreter: Hauck Patent- und Rechtsanwälte

(57) **Zusammenfassung**

Verfahren zum Betreiben eines Windparks mit einer Vielzahl von Windenergieanlagen, die mit einer Windparksteuerung verbunden sind, wobei jede Windenergieanlage zu Wartungs- oder Prüfzwecken eine Leistungsabsenkung ausführen kann, dadurch gekennzeichnet, daß jede der Windenergieanlagen die Leistungsabsenkung ansprechend auf ein Signal der Windparksteuerung durchführen kann und die Windparksteuerung die Signale für die Windenergieanlagen so koordiniert, daß ein Leistungsrückgang des Windparks einen vorgegebenen Betrag und/oder eine bereitgestellte Leistung des Windparks eine vorgegebene Änderungsgeschwindigkeit nicht überschreitet und daß zu jeder Zeit mindestens eine Windenergieanlage nicht von der Leistungsabsenkung betroffen ist.

## Beschreibung

Die Erfindung betrifft ein Verfahren zum Betreiben eines Windparks mit einer Windparksteuerung und einer Vielzahl von Windenergieanlagen, die mit der Windparksteuerung verbunden sind, wobei jede Windenergieanlage zu Wartungs- oder Prüfzwecken eine Leistungsabsenkung ausführen kann.

Heutige Windparks bestehen aus mehreren bis zu hunderten von Windenergieanlagen, die an einen gemeinsamen Netzanschlußpunkt angeschlossen und über diesen in der Regel mit einem Versorgungsnetz eines Energieversorgungsunternehmens verbunden sind. Dabei können die einzelnen Windenergieanlagen über eine größere Fläche verteilt oder auch in einzelnen, räumlich voneinander beabstandeten Gruppen zu einem derartigen Windpark zusammengefaßt sein. Jede einzelne Windenergieanlage weist eine eigene Steuerung auf, die den Betrieb der Windenergieanlage steuert und regelt.

Darüber hinaus gibt es eine übergeordnete Windparksteuerung, die den Betrieb des gesamten Windparks und der einzelnen Windenergieanlagen überwacht. Über eine Datenverbindung zu den einzelnen Windenergieanlagen kann die Windparksteuerung Informationen von den Windenergieanlagen sammeln und Steuerbefehle an die einzelnen Windenergieanlagen senden. Beispielsweise ist es bekannt, alle Windenergieanlagen eines Windparks durch einen zentralen Befehl der Windparksteuerung herunterzufahren und den Windpark komplett vom Netz zu trennen.

Aus dem deutschen Patent DE 103 20 087 B4 ist ein Verfahren zum Betreiben eines Windparks bekannt, mit dem insbesondere beim Anfahren eines Windparks die aus dem Versorgungsnetz bezogene Leistung begrenzt werden kann. Eine Leistungsaufnahme aus dem Versorgungsnetz ist beispielsweise nach einem kompletten Stillstand des Windparks erforderlich, um eine anzufahrende Windenergieanlage nach der Windrichtung auszurichten. Um die vergleichsweise teure, aus dem Versorgungsnetz zu beziehende Energiemenge möglichst gering zu halten, schlägt das Patent vor, zunächst eine einzige oder eine Gruppe von Windenergieanlagen anzufahren, und nachfolgend das Anfahren weiterer Energieanlagen unter Ausnutzung der von den zuerst angefahrenen Windenergieanlagen bereitgestellten Energie durchzuführen.

Der Betrieb von Windenergieanlagen erfordert eine regelmäßige Wartung. Typische Wartungsarbeiten sind beispielsweise ein Schmieren von Getrieben oder Lagern oder eine Überprüfung mechanischer oder elektrischer Komponenten der Windenergieanlage. Um derartige Prüf- und Wartungsarbeiten durchführen zu können, ist häufig eine Absenkung der von der Windenergieanlage erzeugten Leistung erforderlich. Für viele dieser Wartungsarbeiten sind in den Steuerungen der Windenergieanlagen geeignete Routinen hinterlegt, die beispielsweise auf einen manuellen Startbefehl hin die erforderliche Leistungsabsenkung der Windenergieanlage ausführen.

Die zu Wartungszwecken oder zur Durchführung von Prüfroutinen vorgenommenen Leistungsabsenkungen einzelner Windenergieanlagen mindern die von dem gesamten Windpark erzeugte Leistung entsprechend. Es kann zu erheblichen Schwankungen der erzeugten Leistung des Windparks kommen, wobei unter Umständen die von den Netzbetreibern vorgegebenen Netzanschlußregeln verletzt werden und es sogar zu Netzfehlern bis hin zu kompletten Netzausfällen kommen kann.

Davon ausgehend ist es die Aufgabe der Erfindung, ein Verfahren zum Betreiben eines Windparks anzugeben, daß unerwünschte Schwankungen der von dem Windpark eingespeisten Wirk- und/oder Blindleistung in Folge von Wartungs- und/oder Prüfarbeiten reduziert.

Diese Aufgabe wird gelöst durch das Verfahren mit den Merkmalen des Patentanspruchs 1. Vorteilhafte Ausgestaltungen des Verfahrens sind in den Unteransprüchen angegeben.

Das erfindungsgemäße Verfahren dient zum Betreiben eines Windparks mit einer Vielzahl von Windenergieanlagen, die mit einer Windparksteuerung verbunden sind, wobei jede Windenergieanlage zu Wartungs- oder Prüfzwecken eine Leistungsabsenkung ausführen kann, und jede der Windenergieanlagen die Leistungsabsenkung ansprechend auf ein Signal der Windparksteuerung durchführen kann und die Windparksteuerung die Signale für die Windenergieanlagen so koordiniert, daß ein Leistungsrückgang des Windparks einen vorgegebenen Betrag und/oder eine bereitgestellte Leistung des Windparks eine vorgegebene Änderungsgeschwindigkeit nicht überschreitet und wobei zu jeder Zeit mindestens eine Windenergieanlage nicht von der Leistungsabsenkung betroffen ist.

Es ist also jede Windenergieanlage mit Hilfe der ihr eigenen Steuerung in der Lage, eine für die jeweiligen Wartungszwecke erforderliche Leistungsabsenkung durchzuführen. Die Leistungsabsenkung erfolgt jedoch nicht autonom, sondern als Reaktion auf ein von der Windparksteuerung abgegebenes Signal. Durch entsprechende Koordination der Signale für die unterschiedlichen Windenergieanlagen kann die Windparksteuerung dafür Sorge tragen, daß die Schwankungen der von dem Windpark erzeugten Leistung, d.h. wahlweise der Wirk- und/oder Blindleistung, ein bestimmtes Maß nicht überschreiten. Es ist vorgesehen, einen Maximalbetrag für den absoluten Leistungsrückgang des Windparks in Folge der Wartungsarbeiten vorzugeben und/oder für die Änderungsgeschwindigkeit der Leistung des Windparks. Im Gegensatz zu einem vollständigen Herunterfahren des gesamten Windparks ist bei dem erfindungsgemäßen Verfahren zu jeder Zeit mindestens eine Windenergieanlage nicht von der Leistungsabsenkung betroffen.

Die Erfindung macht sich zunutze, daß die Wartungsarbeiten an einzelnen Windenergieanlagen in der Regel nicht zu einem genau vorherbestimmten Zeitpunkt ausgeführt werden müssen, sondern innerhalb eines bestimmten Zeitfensters. Dies ermöglicht, die Leistungsabsenkung einer bestimmten Windenergieanlage zeitlich zu verschieben und nach Bedarf auf die Wartungsarbeiten anderer Windenergieanlagen abzustimmen. Dadurch können gleichzeitig externe Vorgaben für die Leistungserzeugung des Windparks, insbesondere durch Netzanschlußregeln, und notwendige Wartungsintervalle für die Windenergieanlagen eingehalten werden.

Die Leistungsabsenkung einer Windenergieanlage umfaßt dabei grundsätzlich jegliche zu Wartungs- und/oder Prüfzwecken erforderliche Reduzierung der von der Windenergieanlage erzeugten Leistung. Beispielsweise kann für eine Überprüfung der Blattanstellwinkelverstellung ein Durchfahren des Blattanstellwinkels über einen größeren Bereich notwendig sein. In Folge der Blattanstellwinkelverstellung kommt es zu einer Reduzierung der von der Windenergieanlage erzeugten Leistung. Die Windenergieanlage kann jedoch mit dem Versorgungsnetz verbunden bleiben und fortwährend Leistung in das Netz einspeisen.

In einer bevorzugten Ausgestaltung der Erfindung wird eine Windenergieanlage bei einer Leistungsabsenkung vom Netz getrennt. Die Windenergieanlage wird vollständig abgeschaltet. Dies ist für eine Reihe von Wartungsarbeiten erforderlich. Mit diesen Wartungsarbeiten geht daher ein besonders großer Leistungsrückgang des Windparks einher, so daß das erfindungsgemäße Verfahren besonders vorteilhaft ist.

Gemäß einer weiteren bevorzugten Ausgestaltung der Erfindung gibt die Windparksteuerung Wartungstermine für die Windenergieanlagen vor und gibt bei Erreichen eines Wartungstermins ein Signal zur Leistungsabsenkung der zugehörigen Windenergieanlage ab. Die erforderlichen Wartungsarbeiten werden also von der Windparksteuerung zentral verwaltet. Die Windparksteuerung kann die Wartungstermine dabei von vornherein so festlegen, daß Schwankungen des Leistungsrückgangs des Windparks minimiert werden.

In einer weiteren bevorzugten Ausgestaltung der Erfindung ermittelt die Windparksteuerung die Wartungstermine für die Windenergieanlagen auf Grundlage von Betriebsdaten der Windenergieanlagen. Es können die Betriebsdaten jeder einzelnen Windenergieanlage oder von unterschiedlichen Gruppen von Windenergieanlagen erfaßt werden. Zu den Betriebsdaten zählen beispielsweise Daten über den Verschleiß, die Auslastung oder die Betriebsdauer einzelner Komponenten der Windenergieanlage oder der gesamten Windenergieanlage, die Dauer des Betriebs am Netz, die Menge der eingespeisten Energie, die Anzahl an Aufkoppelvorgängen, die Anzahl an Wechseln des Betriebsmodus, Temperaturverläufe, Drehzahlverläufe und so weiter. Die Berücksichtigung derartiger Betriebsdaten ermöglicht der Windparksteuerung eine optimale, bedarfsgerechte Festlegung der Wartungstermine.

Gemäß einer weiteren bevorzugten Ausgestaltung des Verfahrens sendet jede Windenergieanlage vor einer Leistungsabsenkung eine Anfrage an die Windparksteuerung und die Windparksteuerung gibt das Signal zur Leistungsabsenkung ab. Hier wird die Notwendigkeit einer Wartungsarbeit in oder an einer einzelnen Windenergieanlage festgestellt. Bevor die erforderliche Leistungsabsenkung von der Windenergieanlage vorgenommen wird, wird eine entsprechende Anfrage an die Windparksteuerung gestellt. Die Windparksteuerung beantwortet die Anfrage und kann dabei durch Abgabe des Signals zur Leistungsabsenkung eine Freigabe erteilen. Die Freigabe kann auch verweigert oder erst zu einem späteren Zeitpunkt erteilt werden. Es ist dabei möglich, daß die Windparksteuerung weitere Signale, beispielsweise eine explizite Ablehnung der Anfrage, an die Windenergieanlage sendet. Durch das System aus Anfrage und Freigabe kann die Windparksteuerung die Leistungsabsenkungen der einzelnen Windenergieanlagen auch dann wirksam koordinieren, wenn die Wartungsintervalle und -termine der einzelnen Windenergieanlagen in der Windparksteuerung nicht bekannt sind.

Gemäß einer weiteren bevorzugten Ausgestaltung der Erfindung erfolgt die Anfrage als Reaktion auf das Eintreten einer von der Windenergieanlage automatisch erfassten Bedingung. Die automatisch erfaßte Bedingung kann beispielsweise der Ablauf eines Zeitintervalls, das Überschreiten einer vorgegebenen Temperatur oder das Über- oder Unterschreiten eines Grenzwerts durch einen sonstigen Meßwert sein. Die Bedingung wird von der Windenergieanlage, d.h. insbesondere von der Steuerung der Windenergieanlage, automatisch erfaßt. Somit wird die Notwendigkeit einer bestimmten Wartungsarbeit von der Windenergieanlage automatisch festgestellt und an die Windparksteuerung übermittelt.

In einer weiteren bevorzugten Ausgestaltung der Erfindung erfolgt die Anfrage als Reaktion auf eine manuelle Eingabe. Die manuelle Eingabe kann beispielsweise ein Stoppbefehl für eine Windenergieanlage sein, der über die Steuerung der Windenergieanlage erteilt wird. Vor Befolgen des Stoppbefehls richtet die Windenergieanlage in diesem Fall eine entsprechende Anfrage an die Windparksteuerung und führt die einhergehende Leistungsabsenkung erst nach Freigabe durch die Windparksteuerung aus. Dadurch wird erreicht, daß es selbst bei mehreren, an unterschiedlichen Windenergieanlagen gleichzeitig erteilten, manuellen Stoppbefehlen nicht zu einer übermäßigen Leistungsreduzierung des Windparks kommt.

Gemäß einer weiteren bevorzugten Ausgestaltung der Erfindung gibt die Windparksteuerung maximal einer vorgegebenen Anzahl von Windenergieanlagen gleichzeitig ein Signal zur Leistungsabsenkung. Dadurch wird der Leistungsrückgang des Windparks auf den von der vorgegebenen Anzahl von Windenergieanlagen bewirkten Leistungsabfall begrenzt. Ebenfalls möglich ist es, eine vorgegebene Anzahl von Windenergieanlagen festzulegen, die maximal gleichzeitig von einer Leistungsabsenkung betroffen sind.

In einer weiteren bevorzugten Ausgestaltung der Erfindung gibt die Windparksteuerung nach Abgabe eines Signals zur Leistungsabsenkung ein weiteres Signal zur Leistungsabsenkung erst nach einem vorgegebenen Zeitintervall ab. Die Leistungsabsenkung einer zweiten Windenergieanlage erfolgt daher erst nach Ablauf des vorgegebenen Zeitintervalls nach Beginn der Leistungsabsenkung einer ersten Windenergieanlage. Dadurch wird ein gleichzeitiges oder zeitlich eng benachbartes Absenken der Leistung mehrerer Windenergieanlagen vermieden.

In einer weiteren bevorzugten Ausgestaltung der Erfindung gibt die Windparksteuerung nach Abgabe eines ersten Signals zur Leistungsabsenkung einer Windenergieanlage ein weiteres Signal zur Leistungsabsenkung erst nach Änderung eines Status oder eines Betriebszustands der Windenergieanlage und/oder nach Beendigung des ersten Leistungsabsenkungsvorgangs ab. Die Leistungsabsenkung einer weiteren Windenergieanlage erfolgt somit erst, wenn der Leistungsabsenkungsvorgang der ersten Windenergieanlage abgeschlossen ist oder die erste Windenergieanlage einen bestimmten Betriebszustand erreicht hat. Dadurch können die Leistungsabsenkungsvorgänge unterschiedlicher Windenergieanlagen besser aufeinander abgestimmt werden.

Gemäß einer weiteren bevorzugten Ausgestaltung der Erfindung ist einer Anfrage eine Priorität zugeordnet. Die Priorität spiegelt die Dringlichkeit der anstehenden Wartungs- oder Prüfmaßnahme wieder, so daß diese Dringlichkeit bei der Freigabe der Leistungsabsenkung durch die Windparksteuerung berücksichtigt werden kann. Dadurch kann die Windparksteuerung besonders wichtige Wartungs- oder Prüfmaßnahmen sofort einleiten, während weniger wichtige Wartungs- oder Prüfmaßnahmen zurückgestellt werden können.

Gemäß einer weiteren bevorzugten Ausgestaltung der Erfindung erfolgt eine Leistungsabsenkung einer Windenergieanlage ohne ein Signal der Windparksteuerung, falls die Windenergieanlage eine Notfallsituation erkannt hat. Eine Notfallsituation liegt vor, wenn die durchzuführende Wartungsmaßnahme keinen Aufschub duldet. In diesem Fall wird die erforderliche Leistungsabsenkung nötigenfalls auch ohne entsprechende Freigabe durch die Windparksteuerung ausgeführt. Insbesondere unmittelbar sicherheitsrelevante Wartungsmaßnahmen können daher stets ausgeführt werden.

Die Erfindung wird nachfolgend anhand eines in einer Figur dargestellten Ausführungsbeispiels näher erläutert.

Die einzige Figur zeigt einen erfindungsgemäßen Windpark in einer stark vereinfachten, schematischen Darstellung.

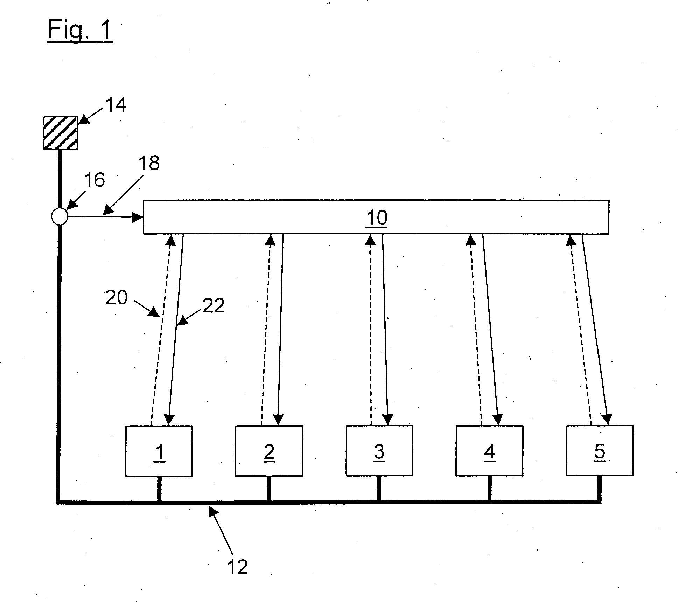

Der in Figur 1 dargestellte Windpark umfaßt fünf Windenergieanlagen 1 bis 5, die über eine nicht dargestellte Datenleitung mit der zentralen Windparksteuerung 10 verbunden sind. Die Windenergieanlagen 1 bis 5 sind ferner über ein Leistungskabel 12 mit einem gemeinsamen Netzanschlußpunkt 16 verbunden. Der Netzanschlußpunkt 16 ist seinerseits mit einem Versorgungsnetz 14 eines Energieversorgungsunternehmens verbunden. Die Windenergieanlagen 1 bis 5 können über den Netzanschlußpunkt 16 Wirk- und/oder Blindleistung in das Versorgungsnetz 14 einspeisen.

Die Windparksteuerung 10 ist über die Verbindung 18 mit dem Netzanschlußpunkt 16 verbunden und kann Meßsignale und/oder Statusmeldungen vom Netzanschlußpunkt 16 erfassen.

Jede der Windenergieanlagen 1 bis 5 umfaßt eine eigene Steuerung, die für die Betriebsführung der Windenergieanlage zuständig ist. Unter anderem liegen in den jeweiligen Steuerungen der einzelnen Windenergieanlagen 1 bis 5 Informationen darüber vor, wann bestimmte Wartungs- und/oder Prüfarbeiten auszuführen sind. Steht beispielsweise in der Windenergieanlage 1 eine Wartungsmaßnahme an, die eine Leistungsabsenkung der Windenergieanlage 1 erfordert, richtet die Steuerung der Windenergieanlage 1 über die bestehende Datenverbindung zur Windparksteuerung 10 eine Anfrage 20 an die Windparksteuerung. Die Windparksteuerung 10 wertet die Anfrage 20 aus und überprüft, ob zum jeweiligen Zeitpunkt eine Leistungsabsenkung der Windenergieanlage 1 im Einklang mit einem vorgegebenen maximalen Leistungsrückgang des Windparks und/oder mit einer vorgegebenen, maximalen Änderungsgeschwindigkeit der von dem Windpark erzeugten Leistung möglich ist. Ist dies der Fall, sendet die Windparksteuerung 10 ein Freigabesignal 22 an die Windenergieanlage 1. Daraufhin startet die Steuerung der Windenergieanlage 1 eine in der Steuerung hinterlegte Routine, die die für die jeweilige Wartungsmaßnahme erforderliche Leistungsabsenkung durchführt.

## Patentansprüche

1. Verfahren zum Betreiben eines Windparks mit einer Vielzahl von Windenergieanlagen (1-5), die mit einer Windparksteuerung (10) verbunden sind, wobei jede Windenergieanlage zu Wartungs- oder Prüfzwecken eine Leistungsabsenkung ausführen kann, **dadurch gekennzeichnet, daß** jede der Windenergieanlagen die Leistungsabsenkung ansprechend auf ein Signal (22) der Windparksteuerung (10) durchführen kann und die Windparksteuerung die Signale für die Windenergieanlagen so koordiniert, daß ein Leistungsrückgang des Windparks einen vorgegebenen Betrag und/oder eine bereitgestellte Leistung des Windparks eine vorgegebene Änderungsgeschwindigkeit nicht überschreitet und daß zu jeder Zeit mindestens eine Windenergieanlage nicht von der Leistungsabsenkung betroffen ist.

2. Verfahren nach Anspruch 1, **dadurch gekennzeichnet, daß** eine Windenergieanlage (1-5) bei einer Leistungsabsenkung vom Netz getrennt wird.

3. Verfahren nach Anspruch 1 oder 2, **dadurch gekennzeichnet, daß** die Windparksteuerung (10) Wartungstermine für die Windenergieanlagen (1-5) vorgibt und bei Erreichen eines Wartungstermins das Signal zur Leistungsabsenkung der zugehörigen Windenergieanlage abgibt.

4. Verfahren nach Anspruch 3, **dadurch gekennzeichnet, daß** die Windparksteuerung (10) die Wartungstermine für die Windenergieanlagen (1-5) auf Grundlage von Betriebsdaten der Windenergieanlagen ermittelt.

5. Verfahren nach Anspruch 1 oder 2, **dadurch gekennzeichnet, daß** jede Windenergieanlage (1-5) vor einer Leistungsabsenkung eine Anfrage (20) an die Windparksteuerung (10) sendet und die Windparksteuerung (10) das Signal (22) zur Leistungsabsenkung abgibt.

6. Verfahren nach Anspruch 5, **dadurch gekennzeichnet, daß** die Anfrage (20) als Reaktion auf das Eintreten einer von der Windenergieanlage (1-5) automatisch erfassten Bedingung erfolgt.

7. Verfahren nach Anspruch 5 oder 6, **dadurch gekennzeichnet, daß** die Anfrage (20) als Reaktion auf eine manuelle Eingabe erfolgt.

8. Verfahren nach einem der Ansprüche 5 bis 7, **dadurch gekennzeichnet, daß** die Windparksteuerung (10) maximal einer vorgegebenen Anzahl von Windenergieanlagen (1-5) gleichzeitig ein Signal (22) zur Leistungsabsenkung gibt.

9. Verfahren nach einem der Ansprüche 5 bis 8, **dadurch gekennzeichnet, daß** die Windparksteuerung (10) nach Abgabe eines Signals (22) zur Leistungsabsenkung ein weiteres Signal zur Leistungsabsenkung erst nach einem vorgegebenen Zeitintervall abgibt.

10. Verfahren nach einem der Ansprüche 5 bis 9, **dadurch gekennzeichnet, daß** die Windparksteuerung (10) nach Abgabe eines ersten Signals (22) zur Leistungsabsenkung einer Windenergieanlage (1-5) ein weiteres Signal zur Leistungsabsenkung erst nach Änderung eines Status oder eines Betriebszustands der Windenergieanlage (1-5) und/oder nach Beendigung des ersten Leistungsabsenkungsvorgangs abgibt.

11. Verfahren nach einem der Ansprüche 5 bis 10, **dadurch gekennzeichnet, daß** einer Anfrage (20) eine Priorität zugeordnet ist.

12. Verfahren nach einem der Ansprüche 1 bis 11, **dadurch gekennzeichnet, daß** eine Leistungsabsenkung einer Windenergieanlage (1-5) ohne ein Signal der Windparksteuerung erfolgt, falls die Windenergieanlage (1-5) eine Notfallsituation erkannt hat.
